# EUROPEAN PATENT SPECIFICATION

(11) **EP 2 378 672 B1**
(45) Date of publication and mention of the grant of the patent: **24.07.2013**
(21) Application number: 10290203.8
(22) Date of filing: 15.04.2010
(51) Int. Cl.: H04B 7/04, H04W 52/14, H04W 52/34, H04W 72/12, H04W 52/24

(54) **Uplink power control for multi-user transmissions**
Uplink-Leistungsregelung für Mehrbenutzerübertragungen
Commande la puissance en liaison ascendante pour transmissions multi-utilisateurs

(43) Date of publication of application: 19.10.2011
(73) Proprietor: Alcatel Lucent, 75007 Paris (FR)
(72) Inventor: Weber, Andreas, 74251 Lehrensteinsfeld (DE); Dötsch, Uwe, 74392 Freudental (DE)
(74) Representative: Wetzel, Emmanuelle

(56) References cited:
- US-A1- 2010 046 479
- Bilal Muhammad: "Closed loop power control for LTE uplink" Master Thesis 30 November 2008 (2008-11-30), XP002601161 Blekinge Institute of Technology School of Engineering, Sweden Retrieved from the Internet: URL:http://www.bth.se/fou/cuppsats.nsf/all /5c60d59b3faa4e4cc12575200077d462/$file/Th esis%20report.pdf [retrieved on 2010-09-16]

## Description

### Field of the Invention

The invention relates to the field of telecommunications, and, more specifically, to simultaneous (parallel) uplink transmissions on the same resources of a cell of a wireless communications network.

### Background

This section introduces aspects that may be helpful in facilitating a better understanding of the invention. Accordingly, the statements of this section are to be read in this light and are not to be understood as admissions about what is in the prior art or what is not in the prior art.

Wireless communication systems typically comprise several cells, each having a base station which defines an area of radio coverage. In the cells, there are usually several users, each with an user equipment such as a mobile, PDA, or other communication access appliance. The user equipments are in general located at different distances from the base station and in different environments which have an influence on the quality of the communication between the user equipments and the base station.

Consequently, the path loss between a user equipment which is located far away from the base station, for example at the border of a cell, is typically relatively high, whereas the path loss of a user equipment which is located close to the base station is comparatively low. Now, as the users should always be provided with a good communication quality irrespective of their location in the cell, an uplink power control is applied in mobile access networks which tries to establish the same signal quality for uplink transmissions to every user, irrespective of the path loss between the user and the base station.

US2010/0046479 A1 and "Closed loop power control for LTE uplink", Bilal Muhammad, Master Thesis, 30 November 2008, Blekinge Institute of Technology, School of Enigeering, Sweden, disclose techniques and an apparatus for controling the transmit power of uplink signals from user terminals in a wireless communication system in an effort to a target carrier-to-interference ratio or power spectral academy at an access point at the same level for all users in order to avoid power imbalances.

To provide the same or nearly the same signal quality to every user irrespective of the path loss between the equipment of the user and the base station, in present systems, the uplink power control and the scheduling unit are aware of the power headroom of all user equipments in a certain cell. Assuming that the user equipments in a cell have the same maximum uplink transmit power, the scheduler will assign a comparatively large number of uplink resources to user equipments being located close to the base station, and a smaller number of uplink resources to user equipments located remote from the base station. The reason for this is that user equipments located remote from the base station will have to transmit with higher power spectral density (PSD) in order to compensate the higher path loss to the base station. Each resource block is assigned to a given bandwidth BW, and the overall bandwidth of the uplink transmissions of one user equipment is related to the power spectral density PSD and to the overall uplink transmission power P by the following formula: P = PSD x N x BW, where N designates the number of resource blocks. Thus, for a given transmit power P, when increasing the power spectral density PSD, a decrease of the number of resource blocks transmitted in the uplink is required.

Now, to enhance throughput and capacity, in present mobile communication systems, parallel (simultaneous) transmissions are provided, using the same (time and frequency) resources of an uplink channel. Such transmissions are also referred to as multi-user (MU) transmissions. However, the number of resource blocks scheduled to user equipments in a multi-user transmission should be identical, such that in the systems of the state of the art, multi-user transmissions are typically performed by combining user equipments having equal path loss on the uplink communication channel to the base station, thus limiting the number of user equipments which may be combined for MU transmissions.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

A first aspect of the invention relates to a method for simultaneous uplink transmissions on the same uplink resources from at least a first and a second user equipment to a base station of a cell of a wireless network, the first user equipment having a smaller path loss to the base station than the second user equipment an equal amount of resource blocks being scheduled both to the first user equipment and to the second user equipment, the method comprising: setting, by an uplink power control of the base station, the same target received power spectral density for uplink transmissions of each user equipment, and performing the uplink transmissions by scheduling, at the base station, an amount of uplink resource blocks to the second user equipment which is chosen such that a maximum available transmit power of the second user equipment is not sufficient for attaining the target received power spectral density at the base station.

It is proposed to perform the scheduling in such a way that at least one of the user equipments involved in the multi-user transmissions (e.g. located at the cell border) will be assigned a number of resource blocks which exceeds the power headroom of that user equipment. Thus, the user equipment at the cell border has to distribute the available power equally over all assigned resources, reducing the received signal power spectral density at the base station below a target (minimum) received PSD set by the uplink power control for all (paired / grouped, respectively, unpaired / ungrouped) user equipments. Hence, the signal quality of the cell border mobile's transmissions at the base station will be lower than the one set by the uplink power control. However, in this way, the wireless system may be provided with power control as usual and may simultaneously benefit from multi-user transmissions with different signal strength / path loss of paired / grouped user equipments.

It will be understood that when using the approach described above, a received power spectral density of uplink transmissions of the first user equipment at the base station will be different from a received power spectral density of uplink transmissions of the second user equipment at the base station, thus facilitating the separation of the transmitted signals in a base station receiver.

In one variant, an amount of resources scheduled to the first user equipment and an uplink transmit power of the first user equipment are chosen such that the received power spectral density of the first user equipment at the base station is greater than or equal to the target (minimum) received power spectral density at the base station. Thus, the scheduler will choose a number of resource blocks for the uplink transmissions and adapt the power headroom such that the first user equipment (having lower path loss) will be able to attain the target received PSD at the base station. Typically, the power headroom is set such that the received PSD of the first user equipment is equal to the target received PSD.

In general, in multi-user transmissions, it is beneficial when an equal amount of resources is scheduled both to the first user equipment and to the second user equipment, as an advanced receiver used for decoding the uplink transmissions, e.g. by applying successive interference cancellation, requires fully overlapping resource blocks. Thus, it is beneficial to assign the same, i.e. fully overlapping, physical resource blocks to the user equipments participating in the multi-user transmissions in a given scheduling interval.

In general, the first user equipment having smaller path loss is located at a shorter distance to the base station than the second user equipment having higher path loss. It will be understood, however, that depending on (topographical or other) conditions of the cell, the reverse case may also occur, i.e. the user equipment with higher path loss may be located closer to the base station than the user equipment having lower path loss.

In another variant, the method further comprises: setting a maximum available transmit power for uplink transmissions of at least one (typically the second) user equipment below a maximum possible transmit power attainable by the user equipment. In wireless systems, e.g. in compliance with the LTE standard, the available maximum transmit power of a user equipment can be limited (set below a maximum possible transmit power of a transmitter of the user equipment) by using a signaling command. Consequently, it may also be possible to pair user equipments / mobile stations located close to the base station with mobile stations at an intermediate distance to the base station, yet having a reduced maximum available transmit power.

In a further variant, the uplink transmissions from the first and the second user equipment are decoded in the base station by using successive interference cancellation. For the reception of multi-user transmissions, an enhanced receiver using algorithms such as successive interference cancellation (SIC) is required. When an enhanced receiver is used, the receiver first decodes the transmission of the user equipment located close to the base station. This transmission has a good channel quality and, due to the reduced PSD of the second user equipment at the cell border, the interference introduced by the co-channel transmission is low. After the successful decoding of the first transmission with the good channel quality, the interference caused by this transmission to the low channel quality transmission is subtracted and the second transmission is subsequently decoded.

In one variant, the method described above is used in a wireless network of the Long Term Evolution (LTE) (advanced) type. A LTE network provides uplink power control in the way described above and also allows for radio link control (RLC) signalling for reducing the available (maximum) transmit power of the user equipments located in a cell.

A further aspect relates to a base station for a cell of a wireless network, the cell comprising at least a first and a second user equipment, the first user equipment having a smaller path loss to the base station than the second user equipment, the base station comprising: an uplink power control unit for setting the same target received power spectral density for uplink transmissions of each user equipment, and a scheduling unit adapted for scheduling an equal amount of resource blocks both to the first user equipment and to the second user equipment wherein the scheduling unit is adapted for scheduling an amount of resource blocks for uplink transmissions to the second user equipment which is chosen such that a maximum available transmit power / power headroom of the second user equipment is not sufficient for attaining the target (minimum) received power spectral density at the base station.

As indicated above, the uplink power control sets a target received PSD for all (paired and unpaired) user equipments of the base station, and the scheduler assigns a number of resources to (at least) one user equipment participating in the MU transmissions which is chosen so large that the target received PSD cannot be attained. It will be understood that although in the above description, only two user equipments participate in MU transmissions, it may also be possible that more than two user equipments are grouped together for MU transmissions.

In one embodiment, the scheduling unit is adapted for assigning a number of resources to the first user equipment and the uplink power control unit is adapted for setting an uplink transmit power of the first user equipment such that the received power spectral density of the first user equipment is greater or equal to the target (minimum) received power spectral density. Thus, the received PSD of the user equipments involved in the MU transmissions is different, facilitating the decoding of the uplink transmissions in the base station.

The scheduling unit is adapted for scheduling an equal amount of resources both to the first user equipment and to the second user equipment. This is beneficial, as the decoding algorithms used for the MU reception typically require fully overlapping transport blocks / PRBs.

In a further embodiment, the base station further comprises: a signaling unit adapted for signaling to at least one user equipment to set its maximum available transmit power for uplink transmissions below a maximum possible transmit power attainable by the user equipment. The signalling may be performed by radio link control (RLC), as provided e.g. in the LTE standard.

In another embodiment, the base station further comprises: a receiver which is adapted for decoding the uplink transmissions from the first and the second user equipment by successive interference cancellation, profiting from the different receive PSD of the user equipments involved in the MU transmissions.

A further aspect relates to a wireless network comprising at least one base station of the type described above, the wireless network being e.g. in compliance with the Long Term Evolution, LTE, standard. Using the approach described above, in such a network, the number of reasonable pairs for MU transmissions can be increased, even allowing to combine MU mobiles located at a cell border with mobiles arranged close to the base station (eNodeB).

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Figures

Exemplary embodiments are shown in the diagrammatic drawing and are explained in the description below. The following are shown:
- **Fig. 1**: shows a schematic diagram of an embodiment of a cell of a wireless communication network according to the invention, and
- **Figs. 2a,b**: show a power spectral density for a normal multi-user transmission mode (a) and an imbalanced multi-user transmission mode (b) in the cell of Fig. 1.

### Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

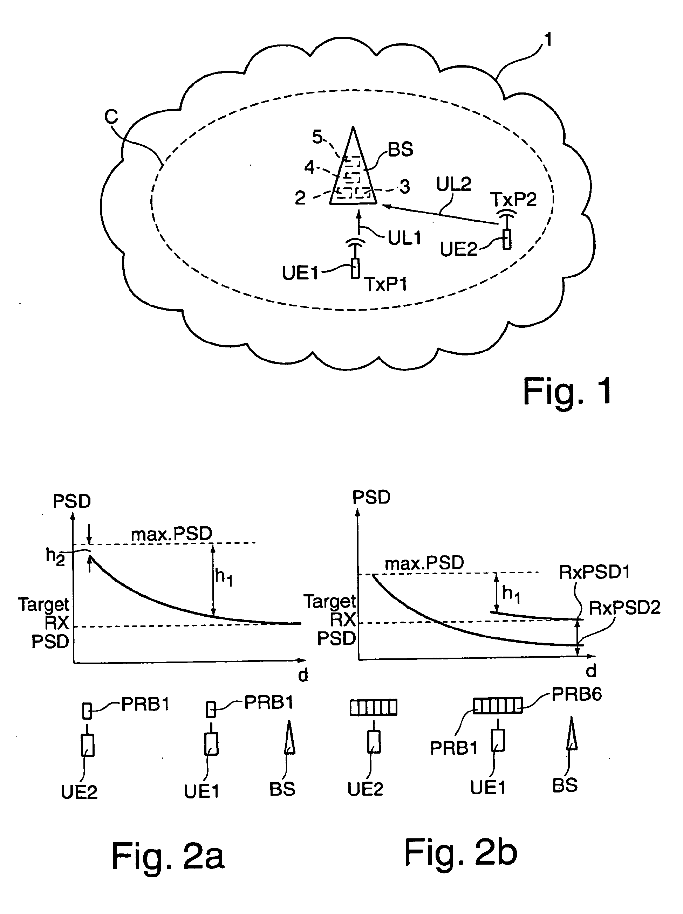

**Fig. 1** shows a cell **C** of a wireless network **1** being in compliance with the Long-Term Evolution, LTE, standard. The cell C comprises a base station **BS** and a first user equipment **UE1** located closer to the base station BS than a second user equipment **UE2.** Both user equipments UE1, UE2 are served by the base station BS and are adapted to perform simultaneous uplink transmissions **UL1, UL2** to the base station BS. For this purpose, each user equipment UE1, UE2 has a transmitter (not shown) which uses a maximum available transmit power **Tx P1, Tx P2,** which is assumed to be identical for both user equipments UE1, UE2. Now, as the two user equipments UE1, UE2 are located at different distances from the base station BS, a path loss from the fist user equipment UE1 to the base station BS is lower than a path loss of the second user equipment UE2 to the base station BS.

In the enhanced communication network 1 of Fig. 1, the base station BS comprises an uplink power control unit 2 which tries to provide an equal signal quality for the uplink transmissions UL1, UL2 from the user equipments UE1, UE2 to the base station BS (and also for other user equipments which may be arranged in the cell C). To this end, the base station BS has to compensate for the different path loss from the user equipments UE1, UE2 in such a way that a target received power spectral density may be attained by both uplink transmissions UL1, UL2. The transmit power P is related to the bandwidth of the uplink transmissions UL1, UL2 by the following formula: P = PSD x bandwidth; the bandwidth is given as the product of the bandwidth occupied by a single (time and frequency) resource block multiplied by the number of resource blocks used in an uplink transmission UL1, UL2.

Thus, the required transmission power is proportional to the number of assigned resources, also referred to as physical resource blocks (PRB). Taking this relation into account, in order to attain a given received PSD at the base station BS, the first user equipment UE1 having lower path loss may be scheduled for transmitting more uplink resource blocks than the second user equipment UE2 having higher path loss. Consequently, a scheduling unit 3 of the base station BS will typically schedule a different number of resource blocks to the first and second user equipment UE1, UE2, and the uplink power control unit 2 will control the transmit power in such a way that the target received PSD at the base station BS will be (almost) identical for both user equipments UE1, UE2.

However, when multi-user transmissions from the first and the second user equipment UE1, UE2 have to be performed on the same uplink resources, i.e. on the same time and frequency blocks, the number of resources assigned to both user equipments UE1, UE2 for multi-user transmissions should be the same, as fully overlapping physical resource blocks should be used.

In a (normal) multi-user transmission mode applied by the base station BS, only user equipments UE1, UE2 having similar path loss to the base station BS will be paired, as will be explained in the following with reference to **Fig. 2a****,** representing a distance **d** from the base station BS (eNodeB) to the first user equipment UE1 (close to the base station) and to the second user equipment UE2 (close to the cell border) on the (negative) x-axis and a power spectral density PSD in dependence of the distance d on the y-axis.

As indicated in Fig. 2a, in order to attain the same target received power spectral density **"Target Rx PSD"** for both user equipments UE1, UE2 at the base station BS, the scheduling unit 2 schedules an (identical) number of physical resource blocks to both user equipments UE1, UE2, the number being chosen such that the second user equipment UE2 located close to the border of the cell C will have sufficient transmit power to attain the target received PSD at the base station BS. In the present example, only one physical resource block **PRB1** is scheduled for the common uplink transmissions of both user equipments UE1, UE2. The uplink power control unit 2 then sets the transmit power of the user equipments UE1, UE2 below the maximum available transmit power Tx P1, Tx P2 such that the received PSD and thus the received signal quality for both user equipments UE1, UE2 is identical and corresponds to the target received PSD "Target Rx PSD". In terms of the PSD, this is achieved by an adequate choice of a power headroom **h1, h2** (difference between the transmit PSD and the maximum attainable transmit PSD **"max. PSD"**) for the user equipments UE1, UE2 . However, even though the target received PSD "Target Rx PSD" can be attained in the normal transmission mode represented in Fig. 2a, only a small number of resource blocks (only one physical resource block PRB1 in the present example) may be used for the multi-user transmissions.

In contrast thereto, in a so-called imbalanced multi-user transmission mode shown in **Fig. 2b****,** the scheduling unit 3 assigns a number of physical resource blocks (six physical resource blocks **PRB1** to **PRB6** in the present example) which is so large that no power headroom is left for the second user equipment UE2 located at the cell border, such that the second user equipment UE2 - even when transmitting with maximum available power - is unable to reach the required received power spectral density "target Rx PSD", i.e. the received PSD **"Rx PSD2"** of the second user equipment UE2 is below the "target Rx PSD". However, as the first user equipment UE1 has a lower path loss to the base station BS, the uplink power control unit 2 of the base station BS may still set the power headroom h1 of the first user equipment UE1 such that a received PSD **"Rx PSD1"** of the first user equipment UE1 is equal to the target received power spectral density "target Rx PSD" at the base station BS.

With respect to the scheduled number of resource blocks, one skilled in the art will readily appreciate that other scenarios are also possible:
For instance, the scheduling unit 3 may assign twice the number of physical resource blocks PRB which may be handled by the second user equipment UE2 with the bad signal quality such that the target received power spectral density "target Rx PSD" required by the uplink power control can be attained.
Consequently, the received power spectral density "Rx PSD2" at the base station BS will be 3 dB below the received power spectral density "Rx PSD1" of the first involved user equipment UE1, being the user equipment with the good signal quality.

Furthermore, in particular when the second user equipment UE2 is located at an intermediate distance d to the base station BS, the maximum transmit power of the second user equipment UE2 (with the lower signal quality) may be additionally reduced by 6 dB for example by using a radio link control RLC signalling by a signaling unit **4** of the base station BS, signaling that the maximum transmit power Tx P2 of the second user equipment UE2 should be reduced below a maximum possible transmit power which can be attained by the transmitter of the second user equipment UE2. In this case, if the same number of physical resource blocks (PRB) is assigned to both user equipments UE1, UE2 as in the case described above, a gap of 9 dB in signal quality between both uplink transmissions UL1, UL2 will be created in the base station BS.

Now, the difference in received power of the uplink transmissions UL1, UL2 can be advantageously used for the decoding of the uplink transmissions UL1, UL2 from the first and the second user equipment UE1, UE2 using an enhanced receiver **5** applying successive interference cancellation, as the interference introduced by the co-channel transmission of the second user equipment UE2 is low. After the successful decoding of the first uplink transmissions UL1 with good channel quality, the interference caused by the first transmission UL1 to the second uplink transmission UL2 with low channel quality can be subtracted and the second uplink transmission UL2 may be subsequently decoded.

In summary, the approach described above enables a mobile communication system to create pairs / groups of user equipments, for example mobiles, for a multi-user transmission in a more flexible and easy way. In contrast thereto, in a normal transmission mode (see Fig. 2a), the principle of uplink power control forces a mobile with a relatively low channel quality, for example a mobile at the cell border, to transmit only a low number of resources at the same time. As indicated above, an enhanced receiver, like a receiver with successive interference cancellation (SIC), requires fully overlapping transport blocks. Consequently, in the normal transmission mode, the pairs of mobiles useable for multi user transmissions are limited to mobiles which have similar path loss and thus an equal or nearly equal signal quality at the base station. However, when using the imbalanced transmission mode, even mobiles with a very bad signal quality, for example mobiles located near the cell border, can be combined with mobiles with a relatively good signal quality, for example mobiles located close to the base station.

The above approach therefore significantly increases the number of reasonable combinations of user equipments for multi-user transmissions in a cell. Thus, the spectral efficiency of uplink connections of a radio access network can be increased with very low effort, especially when advanced receiver techniques like successive interference cancellation (SIC) are used. Furthermore, the interfering signal energy introduced into the communication network may also be reduced.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method for simultaneous uplink transmissions (UL1, UL2) on the same resources (PRB1 to PRB6) from at least a first and a second user equipment (UE1, UE2) to a base station (BS) of a cell (C) of a wireless network (1), the first user equipment (UE1) having a smaller path loss to the base station (BS) than the second user equipment (UE2), an equal amount of resource blocks (PRB1 to PRB6) being scheduled both to the first user equipment (UE1) and to the second user equipment (UE2), the method comprising:
setting, by an uplink power control of the base station (BS), the same target received power spectral density (Target Rx PSD) for uplink transmissions (UL1, UL2) of each user equipment (UE1, UE2),
**characterized by**
performing the uplink transmissions (UL1, UL2) by scheduling, at the base station (BS), an amount of uplink resource blocks (PRB1 to PRB6) to the second user equipment (UE2) which is chosen such that a maximum available transmit power (Tx P2) of the second user equipment (UE2) is not sufficient for attaining the target received power spectral density (Target Rx PSD) set by the uplink power control.

2. The method of claim 1, wherein a received power spectral density (Rx PSD1) of uplink transmissions of the first user equipment (UE1) is different from a received power spectral density (Rx PSD2) of uplink transmissions of the second user equipment (UE2).

3. The method of claim 1 or 2, wherein an amount of resources (PRB1 to PRB6) scheduled to the first user equipment (UE1) and an uplink transmit power of the first user equipment (UE1) are chosen such that the received power spectral density (Rx PSD1) of the first user equipment (UE1) at the base station (BS) is greater or equal to the target received power spectral density (Target Rx PSD).

4. The method according to any one of the preceding claims, wherein the first user equipment (UE1) is located at a shorter distance (d) to the base station (BS) than the second user equipment (UE2).

5. The method according to any of the preceding claims, further comprising:
setting a maximum available transmit power (Tx P1, Tx P2) for uplink transmissions of at least one user equipment (UE1, UE2) below a maximum possible transmit power attainable by the user equipment (UE1, UE2).

6. The method according to any of the preceding claims, wherein the uplink transmissions from the first and the second user equipment (UE1, UE2) are decoded in the base station (BS) by using successive interference cancellation.

7. The method according to any of the preceding claims, being applied in a wireless network (1) of the Long Term Evolution (LTE) type.

8. A base station (BS) for a cell (C) of a wireless network (1), the cell (C) comprising at least a first and a second user equipment (UE1, UE2), the first user equipment (UE1) having a smaller path loss to the base station (BS) than the second user equipment (UE2), the base station (BS) comprising:
an uplink power control unit (2) for setting the same target received power spectral density (Target Rx PSD) for uplink transmissions of each user equipment (UE1, UE2), and
a scheduling unit (3) adapted for scheduling an equal amount of resource blocks (PRB1 to PRB6) both to the first user equipment (UE1) and to the second user equipment (UE2),
**characterized in that**
the scheduling unit (3) is adapted for scheduling an amount of resource blocks (PRB1 to PRB6) for uplink transmissions to the second user equipment (UE2) which is chosen such that an available transmit power (Tx P2) of the second user equipment (UE2) is not sufficient for attaining the target minimum received power spectral density (Target Rx PSD).

9. The base station according to claim 8, wherein the scheduling unit (3) is adapted for assigning an amount of resources to the first user equipment (UE1) and the uplink power control unit (2) is adapted for setting an uplink transmit power of the first user equipment (UE1) such that the received power spectral density (Rx PSD1) of the first user equipment (UE1) at the base station (BS) is greater or equal to the target received power spectral density (Target Rx PSD).

10. The base station according to any one of claims 8 or 9, further comprising: a signaling unit (4) adapted for signaling to a user equipment (UE1, UE2) to set its maximum available transmit power (Tx P1, Tx P2) for uplink transmissions below a maximum possible transmit power attainable by the user equipment (UE1, UE2).

11. The base station according to any one of claims 8 to 10, further comprising:
a receiver (5) which is adapted for decoding the uplink transmissions from the first and the second user equipment (UE1, UE2) by successive interference cancellation.

12. A wireless network (1) comprising at least one base station (BS) according to any one of claims 8 to 11.

13. The wireless network according to claim 12, being in compliance with the Long Term Evolution, LTE, standard.

## Patentansprüche

1. Verfahren für simultane Uplink-Übertragungen (UL1, UL2) auf denselben Ressourcen (PRB1 bis PRB6) von mindestens einem ersten und einem zweiten Benutzerendgerät (UE1, UE2) an eine Basisstation (BS) einer Zelle (C) eines drahtlosen Netzwerks (1), wobei das erste Benutzerendgerat (UE1) einen niedrigeren Pfadverlust zur Basisstation (BS) als das zweite Benutzerendgerät (UE2) aufweist, wobei sowohl für das erste Benutzerendgerät (UE1) als auch für das zweite Benutzerendgerät (UE2) eine gleiche Anzahl von Ressourcenblöcken (PRB1 bis PRB6) geplant wird, wobei das Verfahren umfasst:
Einstellen, durch eine Uplink-Leistungsregelung der Basisstation, derselben spektralen Soll-Empfangsleistungsdichte (Target Rx PSD) für Uplink-Übertragungen (UL1, UL2) eines jeden Benutzerendgeräts (UE1, UE2),
**gekennzeichnet durch**
das Durchführen der Uplink-Übertragungen (UL1, UL2) **durch** Planen, an der Basisstation, einer Anzahl von Uplink-Ressourcenblöcken (PRB1 bis PRB6) an das zweite Benutzerendgerät (UE2), welche derart gewählt wird, dass eine maximale verfügbare Sendeleistung (Tx P2) des zweiten Benutzerendgeräts (UE2) nicht ausreicht, um die von der Uplink-Leistungsregelung eingestellte spektrale Soll-Empfangsleistungsdichte (Target Rx PSD) zu erreichen.

2. Verfahren nach Anspruch 1, wobei sich eine spektrale Empfangsleistungsdichte (Rx PSD1) von Uplink-Übertragungen des ersten Benutzerendgeräts (UE1) von einer spektralen Empfangsleistungsdichte (Rx PSD2) von Uplink-Übertragungen des zweiten Benutzerendgeräts (UE2) unterscheidet.

3. Verfahren nach Anspruch 1 oder 2, wobei eine Menge von an das erste Benutzerendgerät (UE1) geplanten Ressourcen (PRB1 bis PRB6) und eine Uplink-Sendeleistung des ersten Benutzerendgeräts (UE1) derart gewählt werden, dass die spektrale Empfangsleistungsdichte (Rx PSD1) des ersten Benutzerendgeräts (UE1) an der Basisstation (BS) größer als die oder gleich der spektralen Soll-Empfangsleistungsdichte (Rx PSD1) ist.

4. Verfahren nach einem beliebigen der vorstehenden Ansprüche, wobei sich das erste Benutzerendgerät (UE1) In einer kürzeren Entfernung (d) zu der Basisstation (BS) als das zweite Benutzerendgerät (UE2) befindet.

5. Verfahren nach einem beliebigen der vorstehenden Ansprüche, weiterhin umfassend:
Einstellen einer niedrigeren maximalen verfügbaren Sendeleistung (Tx P1, Tx P2) für Uplink-Übertragungen mindestens eines Benutzerendgeräts (UE1, UE2) als eine maximal mögliche von dem Benutzerendgerät (UE1, UE2) erreichbare Sendeleistung.

6. Verfahren nach einem beliebigen der vorstehenden Ansprüche, wobei die Uplink-Übertragungen von dem ersten und dem zweiten Benutzerendgerät (UE1, UE2) unter Verwendung einer sukzessiven Interferenzaufhebung in der Basisstation (BS) decodiert werden.

7. Verfahren nach einem beliebigen der vorstehenden Ansprüche zur Anwendung in einem drahtlosen Netzwerk (1) vom Typ Long Term Evolution (LTE).

8. Basisstation (BS) für eine Zelle (C) eines drahtlosen Netzwerks (1), wobei die Zelle (C) mindestens ein erstes und ein zweites Benutzerendgerät (UE1, UE2) umfasst, wobei das erste Benutzerendgerat (UE1) einen niedrigeren Pfadverlust zur Basisstation (BS) als das zweite Benutzerendgerät (UE2) aufweist, wobei die Basisstation (BS) umfasst:
eine Uplink-Leistungsregelungseinheit (2) zum Einstellen derselben spektralen Soll-Empfangsleistungsdichte (Target Rx PSD) für Uplink-Übertragungen eines jeden Benutzerendgeräts (UE1, UE2), und
eine Planungseinheit (3), ausgelegt für die Planung einer selben Anzahl von Ressourcenblöcken (PRB1 bis PRB6) sowohl an das erste Benutzerendgerät (UE1) als auch an das zweite Benutzerendgerät (UE2),
**dadurch gekennzeichnet, dass**
die Planungseinheit (3) für das Planen einer Anzahl von Ressourcenblöcken (PRB1 bis PRB6) für Uplink-Übertragungen an das zweite Benutzerendgerät (UE2), welche derart gewählt wird, dass eine verfügbare Sendeleistung (Tx P2) des zweiten Benutzerendgeräts (UE2) nicht ausreicht, um die spektrale Soll-Mindestempfangslelstungsdichte (Target Rx PSD) zu erreichen, ausgelegt ist.

9. Basisstation nach Anspruch 8, wobei die Planungseinheit (3) für das Zuteilen einer Anzahl von Ressourcen an das erste Benutzerendgerät (UE1) ausgelegt ist, und wobei die Uplink-Leistungsregelungseinheit (2) dazu ausgelegt ist, die Uplink-Sendeleistung des ersten Benutzerendgeräts (UE1) derart einzustellen, dass die spektrale Empfangsleistungsdichte (Rx PSD) des ersten Benutzerendgeräts (UE1) an der Basisstation (BS) größer als die oder gleich der spektralen Soll-Empfangsleistungsdichte (Target Rx PSD) ist.

10. Basisstation nach einem beliebigen der Ansprüche 8 oder 9, weiterhin umfassend:
Eine Slgnalisierungseinheit (4), welche dazu ausgelegt ist, einem Benutzerendgerät (UE1, UE2) zu signalisieren, seine maximale verfügbare Sendeleistung (Tx P1, Tx P2) für Uplink-Übertragungen niedriger als eine maximal mögliche an dem Benutzerendgerät (UE1, UES) erreichbare Sendeleistung einzustellen.

11. Basisstation nach einem beliebigen der Ansprüche 8 bis 10, weiterhin umfassend:
Einen Empfänger (5), welcher für das Decodieren der Uplink-Übertragungen von dem ersten und dem zweiten Benutzerendgerät (UE1, UE2) durch sukzessive Interferenzaufhebung ausgelegt ist.

12. Drahtloses Netzwerk (1), umfassend mindestens eine Basisstation (BS) gemäß einem beliebigen der Ansprüche 8 bis 11.

13. Drahtloses Netzwerk nach Anspruch 12, welches dem Long Term Evolution- bzw. LTE-Standard entspricht.

## Revendications

1. Procédé pour des transmissions simultanées en liaison montante (UL1, UL2) sur les mêmes ressources (PRB1 à PRB6) à partir d'au moins un premier et un deuxième équipements utilisateur (UE1, UE2) vers une station de base (BS) d'une cellule (C) d'un réseau sans fil (1), le premier équipement utilisateur (UE1) présentant un affaiblissement sur le trajet vers la station de base (BS) Inférieur à celui du deuxième équipement utilisateur (UE2), une quantité égale de blocs de ressource (PRB1 à PRB6) étant planifiée pour le premier équipement utilisateur (UE1) et pour le deuxième équipement utilisateur (UE2), le procédé comprenant l'étape suivante :
définir, par une commande de puissance de liaison montante de la station de base (BS), la même densité spectrale de puissance reçue cible (Target Rx PSD) pour des transmissions en liaison montante (UL1, UL2) de chaque équipement utilisateur (UE1, UE2), **caractérisé par** l'étape suivante
réaliser les transmissions en liaison montante (ULI, UL2) en planifiant, au niveau de la station de base (BS), une quantité de blocs de ressource de liaison montante (PRB1 à PRB6) pour le deuxième équipement utilisateur (UE2) qui est choisi de sorte qu'une puissance de transmission disponible maximale (Tx P2) du deuxième équipement utilisateur (UE2) ne soit pas suffisante pour atteindre la densité spectrale de puissance reçue cible (Target Rx PSD) définie par la commande de puissance de liaison montante.

2. Procédé selon la revendication 1, dans lequel une densité spectrale de puissance reçue (Rx PSD1) de transmissions en liaison montante du premier équipement utilisateur (UE1) est différente d'une densité spectrale de puissance reçue (Rx PSD2) de transmissions en liaison montante du deuxième équipement utilisateur (UE2).

3. Procédé selon la revendication 1 ou 2, dans lequel une quantité de ressources (PRB1 à PRB6) planifiées pour le premier équipement utilisateur (UE1) et une puissance de transmission en liaison montante du premier équipement utilisateur (UE1) sont choisies de sorte que la densité spectrale de puissance reçue (Rx PSD1) du premier équipement utilisateur (UE1) au niveau de la station de base (BS) soit supérieure ou égale à la densité spectrale de puissance reçue cible (Target Rx PSD).

4. Procédé selon l'une quelconque des revendications précédentes, dans lequel le premier équipement utilisateur (UE1) est situé à une distance plus courte (d) par rapport à la station de base (BS) que le deuxième équipement utilisateur (UE2).

5. Procédé selon l'une quelconque des revendications précédentes, comprenant en outre l'étape suivante : définir une puissance de transmission disponible maximale (Tx P1, Tx P2) pour des transmissions en liaison montante d'au moins un équipement utilisateur (UE1, UE2) en dessous d'une puissance de transmission possible maximale qui peut être atteinte par l'équipement utilisateur (UEI, UE2).

6. Procédé selon l'une quelconque des revendications précédentes, dans lequel les transmissions en liaison montante à partir du premier et du deuxième équipements utilisateur (UE1, UE2) sont décodées dans la station de base (BS) en utilisant une annulation d'interférences successives.

7. Procédé selon l'une quelconque des revendications précédentes, appliqué dans un réseau sans fil (1) du type à évolution à long terme (LTE).

8. Station de station (BS) pour une cellule (C) d'un réseau sans fil (1), la cellule (C) comprenant au moins un premier et un deuxième équipements utilisateur (UE1, UE2), le premier équipement utilisateur (UE1) présentant un affaiblissement sur le trajet vers la station de base (BS) inférieur à celui du deuxième équipement utilisateur (UE2), la station de base (BS) comprenant : une unité de commande de puissance de liaison montante (2) pour définir la même densité spectrale de puissance reçue cible (Target Rx PSD) pour des transmissions en liaison montante de chaque équipement utilisateur (UE1, UE2), et
une unité de planification (3) adaptée pour planifier une quantité égale de blocs de ressource (PRB1 à PRB6) pour le premier équipement utilisateur (UE1) et pour le deuxième équipement utilisateur (UE2),
**caractérisée en ce que**
l'unité de planification (3) est adaptée pour planifier une quantité de blocs de ressource (PRB1 à PRB6) pour des transmissions en liaison montante pour le deuxième équipement utilisateur (UE2) qui est choisi de sorte qu'une puissance de transmission disponible (Tx P2) du deuxième équipement utilisateur (UE2) ne soit pas suffisante pour atteindre la densité spectrale de puissance reçue minimum cible (Target Rx PSD).

9. Station de base selon la revendication 8, dans laquelle l'unité de planification (3) est adaptée pour attribuer une quantité de ressources au premier équipement utilisateur (UE1) et l'unité de commande de puissance de liaison montante (2) est adaptée pour définir une puissance de transmission en liaison montante du premier équipement utilisateur (UE1) de sorte que la densité spectrale de puissance reçue (Rx PSD1) du premier équipement utilisateur (UE1) au niveau de la station de base (BS) soit supérieure ou égale à la densité spectrale de puissance reçue cible (Target Rx PSD).

10. Station de base selon l'une quelconque des revendications 8 et 9, comprenant en outre : une unité de signalisation (4) adaptée pour signaler à un équipement utilisateur (UE1, UE2) de définir sa puissance de transmission disponible maximale (Tx P1, Tx P2) pour des transmissions en liaison montante en dessous d'une puissance de transmission possible maximale qui peut être atteinte par l'équipement utilisateur (UE1, UE2).

11. Station de base selon l'une quelconque des revendications 8 à 10, comprenant en outre : un récepteur (5) qui est adapté pour décoder les transmissions en liaison montante à partir du premier et du deuxième équipements utilisateur (UE1, UE2) par une annulation d'interférences successives.

12. Réseau sans fil (1) comprenant au moins une station de base (BS) selon l'une quelconque des revendications 8 à 11.

13. Réseau sans fil selon la revendication 12, conforme à la norme d'évolution à long terme, LTE.
